# EUROPEAN PATENT SPECIFICATION

(11) **EP 1 838 780 B1**
(45) Date of publication and mention of the grant of the patent: **05.09.2012**
(21) Application number: 05774270.2
(22) Date of filing: 12.07.2005
(51) Int. Cl.: C08L 25/06, C08L 71/12, C08K 5/5313, C08K 5/523, C09K 21/12

(54) **FLAMEPROOF STYRENIC RESIN COMPOSITION**
FLAMMGESCHÜTZTE STYROLHARZZUSAMMENSETZUNG
Composition DE RÉSINE STYRÉNIQUE IGNIFUGÉE

(30) Priority: 30.12.2004 KR 20040116820
(43) Date of publication of application: 03.10.2007
(73) Proprietor: CHEIL INDUSTRIES INC., Gumi-si, Gyeongsangbuk-do 730-710 (KR)
(72) Inventor: BAE, Su Hak, Seongdong-gu, Seoul 133-112 (KR); HONG, Sang Hyun, Seoul 152-050 (KR); KU, Jeong Hwan, Gunpo-si, Gyeonggi-do 435-040 (KR); YANG, Jae Ho, Gunpo-si Gyeonggi-do 435-040 (KR)
(74) Representative: Bublak, Wolfgang
(86) International application number: PCT/KR2005/002236
(87) International publication number: WO 2006/070988

(56) References cited:
- EP-A- 1 498 448
- EP-A1- 0 896 023
- WO-A-03/089513
- WO-A-2005/040279
- WO-A1-2004/022640
- DE-A1- 10 317 487
- US-A- 5 444 123
- US-A- 6 028 130
- US-B2- 6 797 754
- DATABASE WPI Week 200329 Thomson Scientific, London, GB; AN 2003-296730 XP002521456 & KR 2002 007 814 A (CHEIL IND INC) 29 January 2002 (2002-01-29)

## Description

### Technical Field

The present invention relates to a flameproof styrenic composition. More particularly, the present invention relates to a flameproof styrenic composition with good flame retardancy and mechanical intensity by employing a phosphoric compound comprising a metal phosphinic acid compound and an aromatic phosphoric acid ester compound.

**Background Art**

A widely known method for flame retardancy of the resin is that a halogen-containing compound and an antimony-containing compound are added to a rubber modified styrene-containing resin to give a good flame-retardant property. The examples of the halogen-containing compounds used in the method above are, for example, polybromodiphenyl ether, tetrabromobisphenol-A, epoxy compounds substituted by bromine, chlorinated polyethylene, etc. An antimony trioxide or an antimony pentaoxide is commonly used as an antimony-containing compound.

The methods for improving the flame-retardant property by applying a halogen- and antimony-containing compound have advantages such as easy acquirement of the flame-retardant property and no degradation of the physical properties. However, the disadvantages could be observed that the halogen-containing compound results in the corrosion of the mold itself by the hydrogen halide gases released during the molding process and is fatally harmful due to the toxic gases liberated in case of fire. Especially, since a polybromodiphenyl ether, mainly used for a halogen-containing flame retardant, can produce toxic gases such as dioxin or furan during combustion, a major concern in this field is to develop a flame retardant which is prepared without a halogen-containing compound.

Generally, when a rubber modified styrene-containing resin is burned, a desired effect of flame retardancy in a solid state cannot be achieved (Journal of Applied Polymer Science, 1998, vol. 68, p.1067). Therefore, to impart a desired effect of flame retardancy, it is necessary to add a char-forming agent to a resin composition, which plays a role in forming the char smoothly.

US Patent No. 3,639,506 discloses a resin composition that acquires flame retardancy by applying a triphenyl phosphate (TPP), one of aromatic phosphoric acid esters, to a polyphenylene ether resin and a styrenic resin. However, the heat-resisting property of the resin composition is dropped due to using the TPP. A halogen-containing compound is employed to prevent this drop.

US Patent No. 3,883,613 discloses a resin composition that acquires flame retardancy by applying a trimesityl phosphate as a flame retardant to a polyphenylene ether resin and a styrenic resin. US Patent No. 4,526,917 discloses a resin composition wherein its flame retardancy is improved in case that a TPP and a trimesityl phosphate is employed together comparing with either of them is employed independently. However, since this aromatic phosphoric acid ester has an amount of a phosphor below 10 percent, the resin composition should be applied in a more considerable amount.

US Patent No. 6,547,613 discloses a resin composition with good flame retardancy comprising a thermoplastic resin such as a glass-fortified PBT and a glass-fortified nylon, an alkyl phosphinic acid metal salt compound and optionally melamine phosphate or metal hydrates. This combination is only bound to a thermoplastic resin rather than a styrenic resin.

In order to solve these problems including environmental problem and stability for the fire, the present inventors have developed a flame retardant styrenic resin composition which has good flame retardancy and heat resistance, and can be prepared by employing an alkyl phosphinic acid metal salt compound and an aromatic phosphoric ester compound to a base resin comprising a styrenic resin and a polyphenylene ether resin.

**Disclosure of Invention**

### Technical Problem

An object of the present invention is the provision of a thermoplastic resin composition having stability for the fire.

Another object of the present invention is the provision of a thermoplastic resin composition which is environmentally friendly with no halogen-containing flame retardant which cause environmental pollution during preparation or combustion of the resin.

A still another object of the present invention is to provide a flame retardant styrenic resin composition with good heat resistance, mechanical strength and flowability stability useful for the housing of electric appliances.

Other objects and advantages of this invention will be apparent from the ensuing disclosure and appended claims.

**Technical Solution**

A flameproof styrenic resin composition of the present invention comprises:

15 to 80 parts by weight of a styrenic resin;

15 to 80 parts by weight of a polyphenylene ether resin; and

0.1 to 25 parts by weight of a phosphoric compound comprising (c₁) 1 to 30 % by weight of an alkyl phosphinic acid metal salt and (c₂) 70 to 99 % by weight of an aromatic phosphate ester, per 100 parts by weight of a base resin comprising (A) and (B).

**Best Mode for Carrying Out the Invention**

(A) Styrenic Resin

The styrenic resin used in the present invention is prepared by blending a rubber, an aromatic mono-alkenyl monomer and/or alkyl ester monomer and polymerizing with heat or a polymerization initiator.

Rubbers that can be used in this invention include polybutadiene, polyisoprenes, styrene-butadiene copolymers and alkylacrylic rubbers. The amount of the rubber is 3 to 30 % by weight, preferably 5 to 15 % by weight, per 100 % by weight of the styrenic resin.

The monomer used in the styrenic resin is one or more monomer selected from the group consisting of aromatic mono-alkenyl monomer and/or alkyl ester monomer, and is used in an amount of 70 to 97 % by weight, preferably 85 to 90 % by weight. 0 to 5 % by weight of an unsaturated nitrile monomer is added and then copolymerization is conducted. In order to render processability and heat resistance to the polymer, also used are acrylic acid, methacrylic acid, maleic anhydride, N-substituted maleimide and so on in the polymerization. These can be added in an amount of 0 to 40 parts by weight.

The resin composition of the present invention can be polymerized with heat and with no polymerization initiator, and a polymerization initiator can be also used. The polymerization initiator used in the present invention may be one or more selected from the group consisting of organic peroxides such as benzoyl peroxide, t-butyl hydroperoxide, acetyl peroxide and cumene hydroperoxide or azo compounds such as azobisisobutyronitrile.

The styrenic resin of the present invention can be produced by a known polymerization method such as bulk polymerization, suspension polymerization, emulsion polymerization or combination thereof. Among them, the bulk polymerization is preferred.

To acquire optimum physical properties in consideration of the blend of a styrenic resin and a polyphenylene ether, the average size of rubber particles is preferably in the range of 0.1 to 2.0 µm.

The styrenic resin (A) of the present invention is used in an amount of 15 to 80 by weight, and more preferably 25 to 80 by weight.

(B) Polyphenylene Ether (PPE)

Since the styrenic resin (A) is not enough to improve flame retardancy and heat resistance, a polyethylene ether (B) is employed with the styrenic resin (A) as a base resin.

Examples of the polyphenylene ether resin include poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, copolymer of poly(2,6-dimethyl-1,4-phenylene) ether and poly(2,3,6-trimethyl-1,4-phenylene) ether, and copolymer of poly(2,6-dimethyl-1,4-pheylene) ether and poly(2,3,5-triethyl-1,4-phenylene) ether. Preferably, copolymer of poly(2,6-dimethyl-1,4-phenylene) ether and poly(2,3,6-trimethyl-1,4-phenylene) ether, and poly(2,6-dimethyl-1,4-phenylene) ether are used, and more preferably poly(2,6-dimethyl-1,4-phenylene) ether is used.

The degree of polymerization of the polyphenylene ether (B) is not limited specifically, but considering heat-stability or processability of the resin composition, it is preferable that the viscosity of the polypheylene ether is in the range of about 0.2 to 0.8 measured in chloroform solvent at 25°C.

The polyphenylene ether (B) of the present invention is used in an amount of 15 to 80 parts by weight, and preferably 20 to 75 parts by weight. Using below 15 parts by weight deteriorates impact strength and flame retardancy.

(C) Phosphoric Compound

(c₁) Alkyl Phosphinic Acid Metal Salt

The alkyl phosphinic acid metal salt is represented by the following structural formula (I):

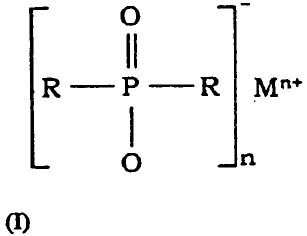

wherein Ris alkyl of C₁₋₄, cyclic alkyl, or aryl of C₆₋₁₀, M is a metal such as Al, Zn and Ca, and n is an integer of 2 or 3.

R is preferably methyl, ethyl, butyl or phenyl group and M is preferably Al or Zn.

The alkyl phosphinic acid metal salt (c₁) preferably has a particle size of below 10 µm. If used in the size of over 10 µm, impact Strength and flame retardancy can be deteriorated. If below 0.01 µm, it is not easy to prepare the composition and the processablility of extrusion becomes poor.

(c₂) Aromatic Phosphate Ester Compound

The aromatic phosphate ester compound used in the present invention is a compound having the following structural formula (II):

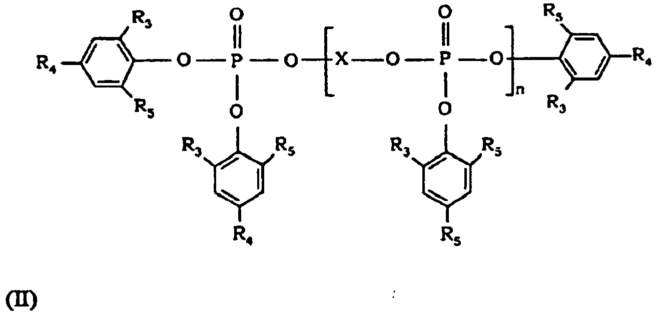

wherein R₃, R₄ and R₅ independently of one another are hydrogen or C₁-C₄ alkyl; X is a C₆-C₂₀ aryl or alkyl-substituted C₆-C₂₀ aryl group that are derivatives from a dialcohol such as resorcinol, hydroquinol and bisphenol-A; and n is 0-4.

Where n is 0, the compound represented in the structural formula (II) is triphenyl phosphate and tri(2,6-dimethyl) phosphate and where n is 1, the compounds include resorcinolbis(diphenyl) phosphate, resorcinolbis(2,6-dimethyl phenyl) phosphate, resorcinolbis(2,4-ditertiary butyl phenyl) phosphate, hydroquinolbis (2,6-dimethyl phenyl) phosphate and hydroquinolbis(2,4-ditertiary butyl phenyl) phosphate. The aromatic phosphate ester (c₂) compounds can be used alone or in combination therewith.

In the present invention, the ratio of the alkyl phosphinic acid metal salt (c₁) and the aromatic phosphate ester (c₂) is in the range of 1/99 to 30/70 in order to improve flame retardancy, impact strength and external appearance.

The phosphoric compound (C) of the present invention is used in an amount of 0.1 to 15 parts by weight per 100 parts by weight of the base resin (A)+(B). Using below 0.1 parts by weight can not acquire an effect of flame retardant. Using over 25 parts by weight deteriorates impact strength, heat resistance and so on.

The flame retardant resin composition of the present invention may further contain conventional additives, for example, plasticizers, heat stabilizers, anti-oxidants, compatibilizers, light stabilizers, pigment, dye and/or inorganic filler. The inorganic filler can be asbestos, glass fiber, talc, ceramic and sulfonate etc. The additives are employed in the amount of 0 to 30 parts by weight on the basis the entire resin composition.

The present invention may be better understood by reference to the following examples that are intended for the purpose of illustration.

**Mode for the Invention**

**Examples**

The components to prepare flameproof thermoplastic resin compositions in Examples and Comparative Examples are as follows:

(A) Styrenic Resin

The styrenic resin of Cheil Industries Inc. (Product name: HG-1760S) was used. The particle size of butadiene rubber was 1.5 µm and the rubber content was 6.5 % by weight.

(B) Polyphenylene Ether Resin (PPE)

A poly(2,6-dimethyl-phenylether) by Asahi Kasehi Co. of Japan (Product name: S-202) was used. The particles had the average size of several dozens of microns (µm) and were in the form of powder.

(C) Phosphoric Compound

(c₁) Alkyl phosphonic acid metal salt

(c₁₁) A diethyl phosphinic acid aluminum salt by Clariant Co. (Product name: Exolit OP930) was used. The average particle size was 5 µm and the phosphor content was 23 % by weight.

(c₁₂) A diethyl phosphinic acid aluminum salt by CLariant Co. (Product name: Exolit OP1230) was used. The average particle size was 20 µm and the phosphor content was 23 % by weight.

(c₂) Aromatic phosphate ester compound

Bis(dimethylphenyl) phosphate bisphenol A produced by Daihachi Chemical of Japan (product name: CR741 S) was used.

**Examples 1-3**

The components as shown in Table 1 were mixed and the mixture was extruded at 200-280 °C with a conventional twin-screw extruder in pellets. The resin pellets were dried at 80 °C for 3 hours, and molded into test specimens for measuring flame retardancy using a 170.46g; (6 oz) injection molding machine at 180-280 °C and mold temperature of 40~80 °C. The flame retardancy was measured in accordance with UL94VB under a thickness of 2.54 mm; (1/10"). The notch Izod impact strength was measured in accordance with ASTM 256A under a thickness of 3.175mm (1/8"). The heat resistance was measured in accordance with ASTM D 1525 under 5 kgf. The spiral length, the length of resin flow, was measured using a 284.1 g (10 oz) injection molding machine at 250 °C and mold temperature of 50 °C at the molding speed of 60 % with an injection flowing measurer. The gloss was measured with a gloss measurer at the measuring angle of 60°.

**Comparative Examples 1-6**

Comparative Examples 1-5 were conducted in the same manner as in Examples 1-3 except that each of compositions was used in accordance with below Table 1. The results are shown in Table 1.

**Table 1**

| | | | Examples | | | Comparative Examples | | | | |
|---|---|---|---|---|---|---|---|---|---|---|
| | | | 1 | 2 | 3 | 1 | 2 | 3 | 4 | 5 |
| (A) | | | 70 | 70 | 75 | 70 | 70 | 70 | 70 | 70 |
| (B) | | | 30 | 30 | 25 | 30 | 30 | 30 | 30 | 30 |
| (C) | (c₁) | (c₁₁) | 2 | 4 | 5 | 20 | - | - | 15 | 15 |
| | | (c₁₂) | - | - | - | - | 20 | - | - | - |
| | (c₂) | | 18 | 16 | 17 | - | - | 20 | 5 | 10 |
| UL94 Flame Retardancy (1/10") 2.54mm | | | V-0 | V-0 | V-0 | V-1 | V-1 | V-1 | V-1 | V-0 |
| Izod Impact Strength 3.175mm (1/8") (kgf·cm/cm) | | | 12 | 12 | 11 | 7 | 3 | 11 | 7 | 5 |
| Heat Resitance (°C) | | | 93 | 96 | 90 | 125 | 123 | 89 | 113 | 103 |
| Spiral Length (250°C, 60%) (cm) | | | 63 | 59 | 67 | 33 | 35 | 65 | 55 | 60 |
| Gloss | | | 92 | 90 | 88 | 85 | 60 | 91 | 85 | 84 |

As shown above, the resin compositions employing an alkyl phosphinic acid metal salt with an aromatic phosphoric ester in specific ratio showed good flame retardancy under a thickness of 2,54 mm (1/10"), heat resistance, and impact strength comparing to those employing the aromatic phosphoric ester independently. When the alkyl phosphinic acid metal salt was used alone, flame retardancy and flowability was remarkably deteriorated. When the average particle size was over 20 µm was employed alone, impact strength and gloss became very poor.

## Claims

1. A flameproof styrenic resin composition comprising:
(A) 15 to 80 parts by weight of a styrenic resin;
(B) 15 to 80 parts by weight of a polyphenylene ether resin; and
(C) 0.1 to 25 parts by weight of a phosphoric compound comprising (c₁) 1 to 30 % by weight of an alkyl phosphinic acid metal salt and (c₂) 70 to 99 % by weight of an aromatic phosphate ester, per 100 parts by weight of a base resin comprising (A) and (B).

2. The flameproof styrenic resin composition as defined in claim 1, wherein the polyphenylene ether (B) is poly(2,6-dimethyl- 1,4-phenylene) ether.

3. The flameproof styrenic resin composition as defined in claim 1, wherein the alkyl phosphinic acid metal salt (c₁) has a particle size of below 10 µm.

4. The flameproof styrenic resin composition as defined in claim 1, wherein the alkyl phosphinic acid metal salt (c₁) is represented by the following structural formula (I): 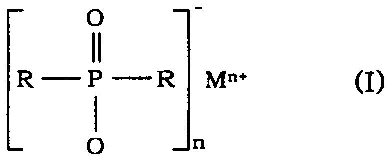 wherein R is alkyl of C₁₋₄, cyclic alkyl, or aryl of C₆₋₁₀, M is a metal such as Al, Zn and Ca, and n is an integer of 2 or 3.

5. The flameproof styrenic resin composition as defined in claim 1, wherein the aromatic phosphoric acid ester (c₂) is represented by the following structural formula (II): 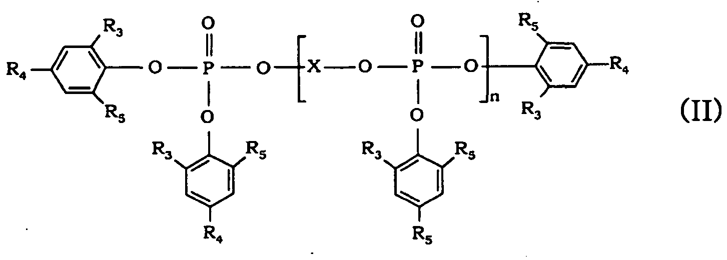 wherein R₃, R₄ and R₅ independently of one another are hydrogen or C₁-C₄ alkyl; X is a C₆-C₂₀ aryl or alkyl-substituted C₆-C₂₀ aryl group that are derivatives from a dialcohol such as resorcinol, hydroquinol and bisphenol-A; and n is 0-4.

6. The flameproof styrenic resin composition as defined in claim 1, wherein the alkyl phosphinic acid metal salt (c₁) is diethyl phosphinic acid aluminum salt.

7. The flameproof styrenic resin composition as defined in claim 1, which further comprises 0 to 30 parts by weight of an additive selected from the group consisting of heat stabilizers, anti-oxidants, compatibilizers, light stabilizers, pigment, dye and inorganic filler.

8. A molded article prepared with the flameproof styrenic resin composition of any one of claims 1-7.

## Patentansprüche

1. Flammfeste Styrolharzzusammensetzung, umfassend:
(A) 15 bis 80 Gewichtsteile eines Styrolharzes;
(B) 15 bis 80 Gewichtsteile eines Polyphenylenetherharzes; und
(C) 0,1 bis 25 Gewichtsteile einer Phosphorverbindung, umfassend (c₁) 1 bis 30 Gew.-% eines Alkylphosphinsäuremetallsalzes und (c₂) 70 bis 99 Gew.-% eines aromatischen Phosphatesters, pro 100 Gewichtsteile eines (A) und (B) umfassenden Basisharzes.

2. Flammfeste Styrolharzzusammensetzung nach Anspruch 1, wobei der Polyphenylenether (B) Poly(2,6-dimethyl-1,4-phenylen)ether ist.

3. Flammfeste Styrolharzzusammensetzung nach Anspruch 1, wobei das Alkylphosphinsäuremetallsalz (c₁) eine Teilchengröße unter 10 µm aufweist.

4. Flammfeste Styrolharzzusammensetzung nach Anspruch 1, wobei das Alkylphosphinsäuremetallsalz (c₁) durch die folgende Strukturformel (I) dargestellt ist: 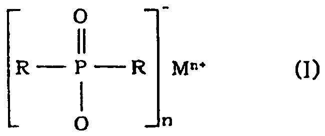 wobei R C₁₋₄-Alkyl, cyclisches Alkyl oder C₆₋₁₀-Aryl ist, M ein Metall wie Al, Zn und Ca ist und n eine ganze Zahl von 2 oder 3 ist.

5. Flammfeste Styrolharzzusammensetzung nach Anspruch 1, wobei der aromatische Phosphorsäureester (c₂) durch die folgende Strukturformel (II) dargestellt ist: 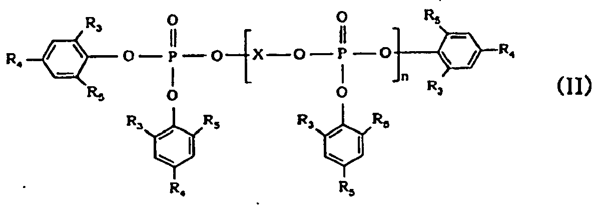 wobei R₃, R₄ und R₅ unabhängig voneinander Wasserstoff oder C₁-C₄-Alkyl sind; X C₆-C₂₀-Aryl oder eine alkylsubstituierte C₆-C₂₀-Arylgruppe ist, bei welchen es sich um Dertivaten eines Dialkohols wie Resorcinol, Hydrochinol und Bisphenol-A handelt, und n 0-4 ist.

6. Flammfeste Styrolharzzusammensetzung nach Anspruch 1, wobei das Alkylphosphinsäuremetallsalz (c₁) Diethylphosphinsäurealuminiumsalz ist.

7. Flammfeste Styrolharzzusammensetzung nach Anspruch 1, die des Weiteren 0 bis 30 Gewichtsteile eines Zusatzes umfasst, der ausgewählt ist aus der Gruppe, bestehend aus Wärmestabilisatoren, Antioxidationsmitteln, Verträglichmachem, Lichtstabilisatoren, Pigment, Farbstoff und anorganischem Füllstoff.

8. Formgegenstand, der mit der flammfesten Styrolharzzusammensetzung nach einem der Ansprüche 1-7 hergestellt ist.

## Revendications

1. Composition de résine styrénique ignifuge comprenant :
(A) 15 à 80 parties en poids d'une résine styrénique ;
(B) 15 à 80 parties en poids d'une résine de poly(éther de phénylène) ; et
(C) 0,1 à 25 parties en poids d'un composé phosphorique comprenant (c₁)
1 à 30 % en poids d'un sel métallique d'acide alkylphosphinique et (c₂)
70 à 99 % en poids d'un ester de phosphate aromatique, pour 100 parties en poids d'une résine de base comprenant (A) et (B).

2. Composition de résine styrénique ignifuge selon la revendication 1, dans laquelle le poly(éther de phénylène) (B) est le poly(éther de 2,6-diméthyl-1,4-phénylène).

3. Composition de résine styrénique ignifuge selon la revendication 1, dans laquelle le sel métallique d'acide alkylphosphinique (c₁) a une taille de particule inférieure à 10 µm.

4. Composition de résine styrénique ignifuge selon la revendication 1, dans laquelle le sel métallique d'acide alkylphosphinique (c₁) est représenté par la formule structurale (I) suivante : 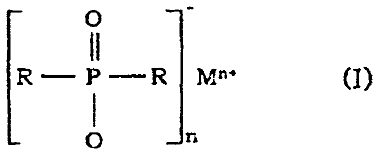 dans laquelle R est un groupe alkyle en C_{1 à 4}, cyclo-alkyle ou aryle en C_{6 à 10}, M est un métal tel qu'Al, Zn et Ca, et n est un nombre égal à 2 ou 3.

5. Composition de résine styrénique ignifuge selon la revendication 1, dans laquelle l'ester d'acide phosphorique aromatique (c₂) est représenté par la formule structurale (II) suivante : 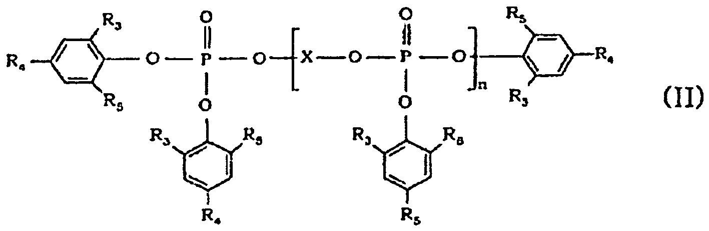 dans laquelle R₃, R₄ et R₅ indépendamment les uns des autres sont un hydrogène ou un groupe alkyle en C₁ à C₄ ; X est un groupe aryle en C₆ à C₂₀ ou un groupe aryle en C₆ à C₂₀ substitué par un groupe alkyle qui sont des dérivés d'un dialcool tel que le résorcinol, l'hydroquinol et le bisphénol A ; et n vaut 0 à 4.

6. Composition de résine styrénique ignifuge selon la revendication 1, dans laquelle le sel métallique d'acide alkylphosphinique (c₁) est un sel d'aluminium de l'acide diéthylphosphinique.

7. Composition de résine styrénique ignifuge selon la revendication 1, qui comprend en outre 0 à 30 parties en poids d'un additif choisi dans le groupe constitué des stabilisants thermiques, des antioxydants, des agents de compatibilité, des photostabilisants, d'un pigment, d'un colorant et d'une charge inorganique.

8. Article moulé préparé avec la composition de résine styrénique ignifuge selon l'une quelconque des revendications 1 à 7.
